# EUROPÄISCHE PATENTSCHRIFT

(11) **EP 0 509 410 B1**
(45) Veröffentlichungstag und Bekanntmachung des Hinweises auf die Patenterteilung: **22.05.1996**
(21) Anmeldenummer: 92106194.1
(22) Anmeldetag: 10.04.1992
(51) Int. Cl.: F16L 33/22

(54) **Schlauchkupplung**
Hose coupling
Raccord pour tuyau souple

(30) Priorität: 19.04.1991 CH 1184/91
(43) Veröffentlichungstag der Anmeldung: 21.10.1992
(73) Patentinhaber: INTERPLAS S.A., CH-6805 Mezzovico (CH)
(72) Erfinder: Ronda, Ferdinando, Mortizza, Piacenza (IT); Coda, Giovanni, CH-6853 Ligornetto (CH)
(74) Vertreter: Troesch Scheidegger Werner AG

(56) Entgegenhaltungen:
- EP-A- 0 091 773
- EP-A- 0 418 620
- WO-A-83/00206
- US-A- 4 278 279
- US-A- 4 577 894

## Beschreibung

Die vorliegende Erfindung betrifft eine Schlauchkupplung, insbesondere für drucklose Kunststoffschläuche, wie beispielsweise Schutzhüllen für Elektrokabel, mit einem zylindrischen Grundkörper in welchen ein Schlauchende einzusetzen und mittels am Grundkörper angeordneten konischen Klemmbacken festzuhalten ist, wobei die Klemmbacken mittels eines von aussen auf diese einwirkenden axial beweglichen Klemmringes in Wirklage gegen den innerhalb der Klemmbacken einzuführenden Schlauch gebracht werden.

Schlauchkupplungen werden für die Verbindung eines Schlauches an einen entsprechenden Anschluss oder ein weiteres Schlauchstück in vielen Anwendungsgebieten eingesetzt. Für die grosse Anzahl von verschiedenen Schläuchen sind auch eine ganze Reihe von Schlauchkupplungen in unterschiedlichsten Ausführungsformen bekannt. Praktisch allen Ausführungen ist gemeinsam, dass das rohrförmige Schlauchende mit dem Kupplungsgehäuse verbunden werden muss, wobei bei praktisch allen Anwendungsgebieten diese Verbindung dicht abgeschlossen sein muss. Bei den meisten bekannten Ausführungsformen wird dabei das senkrecht zur Achse abgetrennte Schlauchende gegen eine Dichtfläche im Kupplungsgehäuse gedrückt und beispielsweise mittels einer Überwurfmutter, welche in ein am Kupplungsgehäuse angebrachte Gewinde eingeschraubt wird, wobei ein zwischen der Überwurfmutter und dem Schlauchmantel befindlicher Klemmring axial verschoben wird und den Schlauchmantel gegen eine Gegenfläche verklemmt. Derartige Verbindungen sind sehr zuverlässig zu realisieren und weisen auch eine hohe Ausreisssicherheit des Schlauches aus dem Kupplungsgehäuse auf. Allerdings ist der Aufwand zur Herstellung solcher Kupplungen relativ hoch, da einerseits eine Mehrzahl von Einzelteilen wie Kupplungsgehäuse, Überwurfmutter und Klemmring hergestellt werden müssen und andererseits das Anfertigen der Gewinde die Herstellung verteuern und hohe Produktionszeiten zur Folge haben.

Eine Lösung, einen äusseren Klemmring nicht mittels eines Gewindes sondern lediglich durch manuelles axiales Verschieben zur Verklemmung des Schlauches zu verwenden ist ebenfalls bekannt. Diese Lösung hat allerdings den Nachteil, dass die Verbindung nicht erschütterungsbeständig ist und praktisch nur für sehr kleine Schlauchdurchmesser verwendet werden kann.

Eine Schlauchkupplung der eingangs definierten Art ist aus EP-A- 0 091 773 bekannt. Bei dieser Kupplung ist aber die Sicherheit der Schlauchverankerung nicht gewährleistet.

Lösungen zeigen auch US-A-4 278 279 und US-A-4 577 894, welche sich jedoch konstruktiv vom Erfindungsgegenstand unterscheiden und auch zusammen betrachtet die Erfindung nicht nahezulegen vermögen.

Die Aufgabe der vorliegenden Erfindung bestand nun darin, eine Kupplung zu schaffen, welche eine zuverlässige Verbindung des Schlauchendes gewährleistet und dabei den Schlauch axial ausgerichtet hält, einfach zu bedienen und sehr einfach herzustellen ist.

Diese Aufgabe wird erfindungsgemäss durch die Merkmale des kennzeichnenden Teils von Anspruch 1 gelöst.

Damit ist nicht nur ein sicheres Festklemmen des Schlauches gewährleistet, sondern gleichzeitig der Schlauch genau axial ausgerichtet gehalten (kein Schrägstellen, welches die relative Dichtigkeit in Frage stellen würde).

Eine bevorzugte Ausführungsform der Erfindung sieht vor, dass drei gleiche, sich über den Umfang geschlossen aneinanderreihende Flächen vorgesehen sind, welch eine sinusförmig verlaufende Steuerfläche bilden.

Die Erfindung zeichnet sich vorzugsweise dadurch aus, dass an den höchsten Stellen der Steuerfläche jeweils eine oder mehrere Vertiefungen angebracht sind, in welche eine an der entsprechenden Stelle der Gegenfläche angebrachte Erhöhung beispielsweise in der Form einer Halbkugel eingreifen kann.

Die erfindungsgemässe Schlauchkupplung lässt sich vorteilhaft sehr kostengünstig herstellen, da sie aus nur zwei Teilen besteht und für das Anbringen des Schlauches kein Gewinde an der Kupplung notwendig ist. Ebenfalls ist das Klemmen des Schlauches durch blosses Drehen des Klemmringes sehr einfach durchzuführen und vermag auch bei grösseren Schlauchdurchmessern genügend Klemmkraft zu übertragen. Durch das Anbringen der Vertiefungen in der Steuerfläche kann der Klemmring in einer dieser Positionen einrasten und kann sich dadurch nicht selbständig lösen.

Ein Ausführungsbeispiel der Erfindung wird nachstehend anhand von Zeichnungen noch näher erläutert.

Es zeigen
Fig.1 die Ansicht einer erfindungsgemässen Schlauchkupplung;
Fig. 2 drei Querschnitte durch eine prinzipiell der Fig. 1 entsprechende Schlauchkupplung in unterschiedlichen Verdrehlagen des Klemmringes (Ausgangslage; 45° bzw. 90° verdreht);
Fig. 3a und 3b, rein schematisch, eine Variante der Schlauchkupplung nach Fig. 1, bei welcher die Steuerflächen je drei sinusförmig verlaufende Abschnitte aufweist, und
Fig. 4, rein schematisch, den Verriegelungsmechanismus zwischen den aneinanderliegenden Steuerflächen in Klemmstellung.

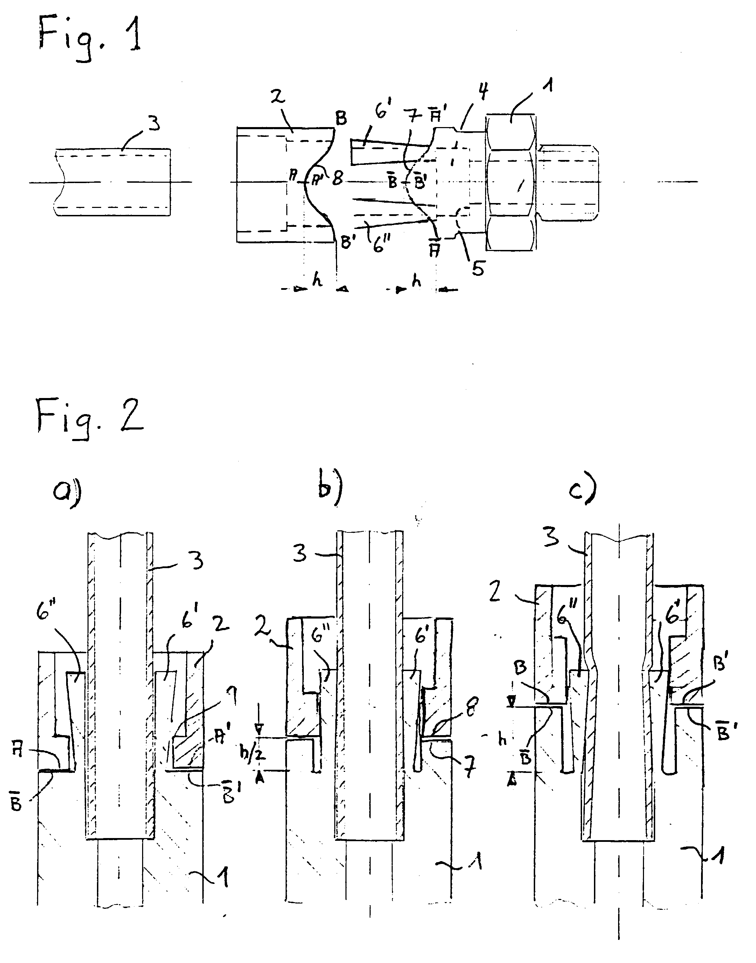

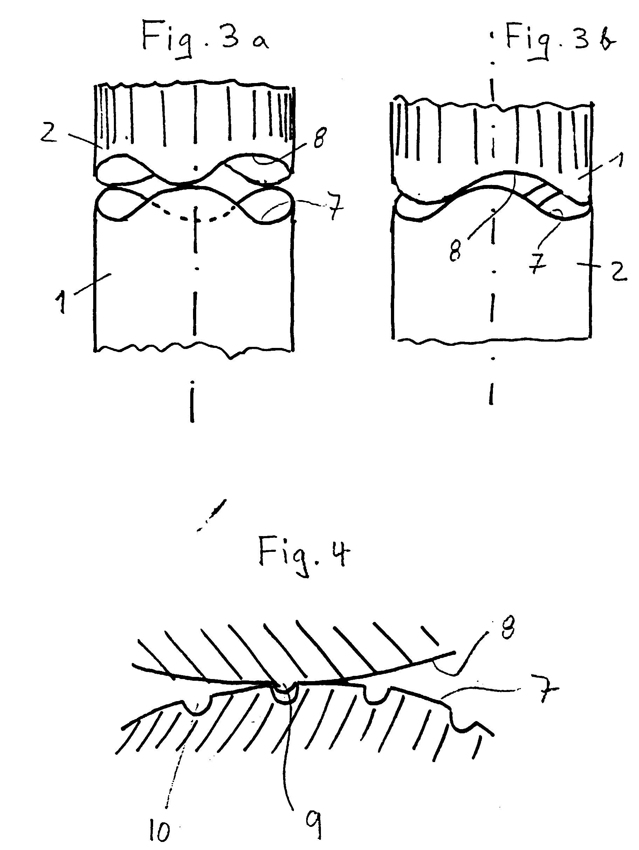

In Fig. 1 ist der Grundkörper 1 mit nicht aufgesetztem Klemmring 2 und dem einzuführenden und festzuklemmenden Schlauchende 3 in der Seitenansicht dargestellt. Das eine Ende des Grundkörpers 1 ist hier beispielsweise in bekannter Weise als Schraubkörper mit integriertem Sechskantteil ausgebildet. Selbstverständlich sind alle anderen bekannten Formen wie axial drehbarer Anschlussteil, Krümmer u.a. als Ausführung möglich. Der Grundkörper 1 weist zur Aufnahme des Schlauchendes 3 eine Bohrung 4 mit Dichtkante 5 (eventuell mit aufliegendem Dichtring) in bekannter Ausführungsform auf. Ebenfalls direkt am Grundkörper angebracht sind konische Klemmbacken 6', 6'' (z.B. 4-12 Backen), welche vorzugsweise an ihren Innenseiten Rückhaltekanten zur Ausreisssicherung des Schlauches aufweisen. Ausserhalb dieser Klemmbacken ist die schräg umlaufende Steuerfläche 7 ersichtlich, mit zwei tiefsten A, A' und zwei höchsten B, B' Stellen. Beim gezeigten Beispiel ist die Steuerfläche 7 derart wellenförmig ausgestaltet, dass zwei tiefste und höchste Stellen vorhanden sind. Dies hat den Vorteil, dass beim Verdrehen des Klemmringes 2 mit ebenso ausgestalteter Gegenfläche 8 wenigstens zwei Punkte dieser Flächen jeweils miteinander in Berührung stehen. In der in Fig. 1 gezeigten Ausführungsform berühren sich die Steuerfläche 7 und die Gegenfläche 8 ausser in der geschlossenen Lage bei einer beliebigen verdrehten Lage jeweils nur linienförmig an den beiden höchsten Stellen des Umfangs.

In Fig. 2a) ist ein Querschnitt durch eine mit Fig. 1 vergleichbare Schlauchkupplung gezeigt, wobei der Klemmring 2 in seine unterste Position (Ausgangslage) verdreht ist, in der die Klemmbacken 6',6'' in ihrer weitesten Oeffnungslage sind. Das Schlauchende 3 kann somit durch die Oeffnung in die Bohrung 4 eingeführt und gegen die Dichtkante 5 gedrückt werden. Durch Verdrehen des Klemmringes 2 um 45^{o} wird dieser axial gegen oben verschoben und die Kante 9 des Klemmringes 2 wirkt gegen die Klemmbacken 6',6'', welche gegen die Schlauchwand des Schlauchendes 2 gepresst werden, wie in Fig. 2 b) dargestellt.

Die grösste Klemmwirkung wird in der in Fig. 2 c) gezeigten Position erreicht (Ring 2 um 90^{o} verdreht, wobei sich die Steuerfläche 7 an ihren höchsten Punkt B,B' der Gegenfläche 8 berührt. Die Klemmbacken 6',6'' drücken in dieser Lage am tiefsten in die Wand des Schlauchendes 3 und fixieren diese in der Schlauchkupplung. Durch weiteres Verdrehen in dieselbe oder entgegengesetzte Richtung wird der Klemmring unter der Wirkung der Klemmbacken 6',6'' wieder gegen unten bewegt, womit sich das Schlauchende 2 aus der Schlauchkupplung ausziehen lässt.

Insbesonders vorteilhaft erweist sich die Ausführung des Klemmringes derart, dass seine Aussenfläche strukturiert ist, beispielsweise gerillt, um die für die Verdrehung notwendige Kraft ohne Werkzeuge von Hand besser einleiten zu können. Ebenfalls ist es vorteilhaft, die Aussenfläche über den zylindrischen Teil des Grundkörpers herabzuziehen, um so dem Klemmring eine Führung zu gewährleisten und auch die Steuer- und Gegenflächen vor Schmutz zu schützen.

Damit sich der KLemmring nicht selbständig verdrehen kann, können Vertiefungen im Bereich der höchsten Stellen der Steuerfläche vorgesehen werden (s. Fig. 4), in welche ein entsprechender Noppen in der Gegenfläche einrasten kann. Indem mehrere solche Vertiefungen angebracht werden, können Schlauchdurchmesser einer gewissen Toleranz mit derselben Schlauchkupplung verwendet werden. Die Toleranz ergibt sich aus dem Spannbereich der Klemmbacken und den jeweils vorhandenen Einrastpunkten für den Klemmring.

Die geschilderte Klemmringkonstruktion lässt sich insbesondere sehr einfach aus Kunststoff in wenigen Produktionsschritten kostengünstig herstellen.

Fig. 3a und 3 b zeigen eine Kupplung, bei welcher die Steuerflächen 7,8 des Grundkörpers 1 bzw. des Klemmringes 2 sinusförmig verläuft und drei Erhöhungen bzw. Vertiefungen aufweist. Mit dieser Konstruktion wird gewährleistet, dass sich bei Verdrehung des Ringes 2 dieser bezüglich des Grundkörpers genau axial verschiebt (kein Abkippen).

## Patentansprüche

1. Schlauchkupplung für drucklose Kunststoffschläuche, wie beispielsweise Schutzhüllen für Elektrokabel, mit einem zylindrischen Grundkörper, in welchen ein Schlauchende einzusetzen und mittels einstückig mit dem Grundkörper ausgebildeten konischen Klemmbacken festzuhalten ist, wobei die Klemmbacken mittels eines von aussen auf diese einwirkenden axial beweglichen Klemmringes in Wirklage gegen den innerhalb der Klemmbacken einzuführenden Schlauch gebracht werden, dadurch gekennzeichnet, dass am Grundkörper mehrere am Umfang aneinandergereiht angeordnete, geneigt bzw. schräg zu einer Normalebene zur Körperlängsachse kontinuierlich verlaufende Flächen vorgesehen sind, welche zusammen eine sich über den gesamten Umfang kontinuierlich erstreckende Steuerfläche bilden und gegen welche gegengleich ausgebildete Gegenflächen des Klemmringes anliegen, derart dass beim Verdrehen des Ringes sich dieser über die Schrägen laufend axial verschiebt und dabei die Klemmbacken betätigt, wobei die geneigt bzw. schräg verlaufenden Flächen zusammen eine Steuerfläche in Wellenform mit tiefsten und höchsten Stellen aufweisen.

2. Schlauchkupplung nach Anspruch 1, dadurch gekennzeichnet, dass drei gleiche, sich über den Umfang geschlossen aneinanderreihende Flächen vorgesehen sind, welche eine sinusförmig verlaufende Steuerfläche bilden.

3. Schlauchkupplung nach Anspruch 1 oder 2, dadurch gekennzeichnet, dass an den höchsten Stellen der Steuerfläche jeweils eine oder mehrere Vertiefungen angebracht sind, in welche eine an der entsprechenden Stelle der Gegenfläche angebrachte Erhöhung, beispielsweise in der Form einer Halbkugel, eingreifen kann.

4. Schlauchkupplung nach einem der Ansprüche 1 bis 3, dadurch gekennzeichnet, dass der Klemmring an seiner Aussenfläche Rillen aufweist.

5. Schlauchkupplung nach einem der Ansprüche 1 bis 4, dadurch gekennzeichnet, dass der Klemmring an seiner dem Grundkörper zugewandten Ende hülsenförmig derart ausgebildet ist, dass er die Steuerfläche des Grundkörpers abdeckt.

## Claims

1. Hose coupling for pressureless plastic hoses, such as protective sheets for electric cables, having a cylinder shaped base body into which one end of the hose is to be introduced and held therein by conical clamping jaws formed in one piece with said base body, whereby the clamping jaws are to be brought in an active position against said hose to be introduced inside of said clamping jaws by means of an axially movable clamping ring acting from outside on said clamping jaws, characterized in that said base body comprises a plurality of continuously extending surfaces distributed in series around the base body circumference, said surfaces being inclined relatively to a plane normal to the longitudinal axis of the base body and forming together a control surface extending continuously over the whole circumference and against which abut mating counter-surfaces of said clamping ring in such a manner that upon a rotating of the ring the clamping ring moves axially over said inclined surfaces to thereby activate said clamping jaws, said inclined surfaces forming together a control surface in the shape of waves having lowest and highest regions.

2. Hose coupling according to claim 1, characterized in that it comprises three identical closely adjacent surfaces over the circumference forming a sinusoidally extending control surface.

3. Hose coupling according to claim 1 or 2, characterized in that each highest region of said control surface is provided with one or more recesses into which mating projections, for example in the form of hemispheres, at corresponding locations in the counter-surface may engage.

4. Hose coupling according to any of claims 1 to 3, characterized in that said clamping ring presents grooves on its outer surface.

5. Hose coupling according to any of claims 1 to 4, characterized in that said clamping ring is sleeve-shaped on its end opposite the base body in a manner to cover the control surface on said base body.

## Revendications

1. Raccord pour tuyaux souples en matière plastique ne se trouvant pas sous pression, comme des enveloppes de protection pour câbles électriques, comprenant un corps de base cylindrique dans lequel une extrémité d'un tuyau souple est à introduire et à y retenir au moyen de mâchoires de serrage coniques formées d'une pièce avec le corps de base, lesdites mâchoires étant à amener en position active contre le tuyau à introduire à l'intérieur des mâchoires au moyen d'un anneau de serrage déplaçable axialement et agissant depuis l'extérieur sur lesdites mâchoires, caractérisé en ce que le corps de base comprend une pluralité de surfaces distribuées et s'étendant en continue autour de la circonférence du corps de base, ces surfaces étant inclinées par rapport à un plan normal à l'axe longitudinal du corps de base et formant ensemble une surface de commande s'étendant continuellement autour de la circonférence et contre laquelle buttent des contre-surfaces correspondantes de l'anneau de serrage d'une manière telle que toute rotation de l'anneau déplace axialement l'anneau de serrage par dessus les surfaces inclinées pour actionner les mâchoires de serrage, lesdites surfaces inclinées formant ensemble une surface de commande en forme de vagues présentant des régions élevées et dépressées.

2. Raccord pour tuyaux selon la revendication 1, caractérisé en ce qu'il comprend trois surfaces égales en suite distribuées le long de la circonférence et formant une surface de commande sinusoïdale.

3. Raccord pour tuyaux selon la revendication 1 ou 2, caractérisé en ce que chaque région élevée de la surface de commande présente une ou plusieurs évidements prévus pour recevoir des projections correspondantes, par exemple en forme d'hémisphères, dans la contre-surface.

4. Raccord pour tuyaux selon l'une des revendications 1 à 3, caractérisé en ce que l'anneau de serrage présente des rainures sur sa surface extérieure.

5. Raccord pour tuyaux selon l'une des revendications 1 à 4, caractérisé en ce que l'anneau de serrage présente à son extrémité en face du corps de base une forme tubulaire de manière à recouvrir la surface de commande sur le corps de base.
